# EUROPEAN PATENT SPECIFICATION

(11) **EP 2 231 296 B1**
(45) Date of publication and mention of the grant of the patent: **15.05.2013**
(21) Application number: 08854672.6
(22) Date of filing: 28.11.2008
(51) Int. Cl.: B01D 11/04, B01D 15/38, B01D 61/38, B01D 63/02, B01J 20/26, B01J 20/285, B01J 20/28

(54) **METHOD FOR EXTRACTING CHEMICALS**
VERFAHREN ZUM EXTRAHIEREN VON CHEMIKALIEN
PROCÉDÉ POUR EXTRAIRE DES PRODUITS CHIMIQUES

(30) Priority: 30.11.2007 ZA 200705648
(43) Date of publication of application: 29.09.2010
(73) Proprietor: University Of Witwatersrand, Johannesburg, 2050 Johannesburg (ZA)
(72) Inventor: CUKROWSKA, Ewa, Johannesburg 2050 (ZA); CHIMUKA, Luke, Johannesburg 2050 (ZA)
(74) Representative: McDade, Sophie V.G.A.
(86) International application number: PCT/IB2008/003265
(87) International publication number: WO 2009/068977

(56) References cited:
- JP-A- 2005 161 301
- AVILA ET AL: "Supported liquid membrane-modified piezoelectric flow sensor with molecularly imprinted polymer for the determination of vanillin in food samples" TALANTA, ELSEVIER, AMSTERDAM, NL, vol. 72, no. 4, 15 May 2007 (2007-05-15), pages 1362-1369, XP022079227 ISSN: 0039-9140
- ULBRICHT M: "Membrane separations using molecularly imprinted polymers" JOURNAL OF CHROMATOGRAPHY B: BIOMEDICAL SCIENCES & APPLICATIONS, ELSEVIER, AMSTERDAM, NL, vol. 804, no. 1, 5 May 2004 (2004-05-05), pages 113-125, XP004501566 ISSN: 1570-0232
- PILETSKY S A ET AL: "Receptor and transport properties of imprinted polymer membranes - a review" JOURNAL OF MEMBRANE SCIENCE, ELSEVIER SCIENTIFIC PUBL.COMPANY. AMSTERDAM, NL, vol. 157, no. 2, 7 May 1999 (1999-05-07), pages 263-278, XP004222951 ISSN: 0376-7388
- ZHANG Z ET AL: "Molecularly imprinted thin film self-assembled on piezoelectric quartz crystal surface by the sol-gel process for protein recognition" BIOSENSORS & BIOELECTRONICS, ELSEVIER SCIENCE PUBLISHERS, BARKING, GB, vol. 21, no. 7, 15 January 2006 (2006-01-15), pages 1244-1251, XP024961407 ISSN: 0956-5663 [retrieved on 2006-01-15]

## Description

### FIELD OF THE INVENTION

This invention relates to a method of and an apparatus for extracting chemicals from a solution and, more particularly, to extracting chemical species, for, *inter alia,* general chemical analysis.

### BACKGROUND TO THE INVENTION

The extraction and consequent concentration of chemical species from a variety of aqueous solutions is of great importance for a number of disciplines. A medical practitioner must be in a position to diagnose an ailment precisely and needs accurate indications of a range of vascular or cellular chemical compositions. Similarly, precise determinations of the concentration of a range of chemicals are necessary for a scientist working in, for example, the environmental field before the state of health or pollution of a wetlands ecosystem can be ascertained.

The above represent only two types of situation where the extraction or separation of specific chemical compositions from a solution is important.

With regard to the historical development of separation or extraction techniques, at first it was directed at developing techniques that are capable of extracting as many compounds as possible with minimal organic solvents for multi-residue analysis [1]. Later, the focus shifted more to techniques that are capable of fast response times and high sample throughput such as immunoassays [2]. More recently, attention has been concentrated on simple and miniaturised techniques, capable of easy coupling to analytical instruments. Such novel, simple and miniaturised extraction techniques that have been accepted by the scientific community in analytical sciences include Solid-Phase Micro-Extraction (SPME) [3] and Stir-Bar Sorptive Extraction (SBSE) techniques [4]. However, these novel techniques mainly use extraction sorbents that interact with the analytes through hydrophobic interactions, and this makes them unsuitable for applications that involve complex matrices samples such as wastewater, plant extracts and biological fluids. SPME is also mainly suitable for analytes with a very high octanol-water partition coefficient (K_{o/w} > 20 000 for a 10-mL sample) due to the small volume of poly(dimethylsiloxane)-coating (PDMS-coating) used [5].

The article "Supported liquid membrane-modified piezoelectric flow sensor with molecularly imprinted polymer for the determination of vanillin in food samples" of Ávila & al. (Talanta, (72), pp.1362-1369) discloses the use of two units placed in series, the first one comprising a liquid membrane, the second one a piezoelectric quartz whose surface has been modified by molecular imprinted polymers MIPs. The latter is used as a sensor to detect vanillin molecules extracted in the first unit, not to specifically adsorb them for recovery.

It should be noted that in this specification and in the claims the term "desired chemical composition" or "desired chemical" is intended to refer to a chemical composition which is extracted from a solution containing the same.

### OBJECT OF THE INVENTION

It is an object of this invention to provide a method for extracting chemicals from a solution and, more particularly, for extracting chemical species, for, *inter alia,* general chemical analysis.

### SUMMARY OF THE INVENTION

In accordance with this invention there is provided a method for extracting at least one desired chemical composition from a solution comprising placing a solution containing the desired chemical composition into a first chamber, placing an adsorbent material which, in use, selectively adsorbs and forms a complex with the desired chemical composition into a second chamber which is in fluid communication with the first chamber but separated therefrom by a liquid membrane which allows passage therethrough of the desired chemical composition to be extracted but impedes the passage of the desired chemical composition and adsorbent complex, allowing the desired chemical composition to diffuse across the membrane to be adsorbed by and form a complex with the adsorbent material, and removing the adsorbent material and desired chemical composition complex from the second chamber.

There is also provided for the first and second chambers to be contained within a single vessel and for the second chamber to be formed from a bag fashioned from the liquid membrane. Alternatively there is provided for the membrane to be fashioned into a number, preferably a plurality and further preferably a multiplicity, of hollow fibres, the inside or insides of which contain the adsorbent material and form the second chamber.

There is further provided for the adsorbent material to be in a solution, preferably a solution including an organic solvent, further preferably toluene. Alternatively there is provided for the adsorbent material to be an antibody. Further alternatively for the adsorbent material to be an antibody, for the adsorbent material to be a polymer, preferably a molecularly imprinted polymer, in the form of beads, alternatively fibres.

There is further provided for the solution containing the desired chemical composition to be an aqueous solution.

There is further provided for the second chamber to contain a number of different adsorbent materials each of which, in use, selectively adsorbs and, consequently extracts, a different chemical composition from the solution in the first chamber.

According to a further aspect, there is provided an analytical method for analyzing at least one chemical composition comprising adsorbing the chemical composition onto an adsorbent material which selectively adsorbs and forms a complex with the desired chemical composition is placed as described above and, subsequently, performing a desired analysed on the adsorbed chemical composition using techniques well known in the art.

### BRIEF DESCRIPTION OF THE FIGURES

The above and additional aspects of the invention will be described below by way of example only and with reference to the accompanying figures in which:
- Figure 1: A laboratory scale set-up of the polymerisation process in an oil bath at 60°C.
- Figure 2:: Set-up of the LM-MIP extraction technique.
- Figure 3:: Scanning electron microscope pictures of polymer beads.
- Figure 4:: Plot of obtained extraction efficiency against the amount of MIP in the organic acceptor solution
- Figure 5:: Plot of obtained extraction efficiency against different organic solvents in the acceptor phase
- Figure 6:: Plot of obtained extraction efficiency against different desorption solvents of the triazines from the MIP beads
- Figure 7:: Plot of obtained extraction efficiency against the different extraction times. Figure 8: Chromatograms obtained after direct injection of vegetable extract
- Figure 9:: Chromatograms obtained after direct injection of apple extract spiked

### DETAILED DESCRIPTION OF ONE EMBODIMENT

In a non-limiting embodiment of the invention which was aimed at testing for the extraction of triazine herbicides in fruit samples, a combination of Liquid Membranes (LM's) and Molecularly Imprinted Polymers (MIP's) is used. The embodiment takes advantage of both technologies for preparing what is envisaged to be an efficient extraction technique (LM-MIP extraction technique) but, the above notwithstanding, it must be appreciated that any material, including polymers and antibodies, which can adsorb selectively a desired chemical composition or species may be used.

Triazine herbicides are widely used as herbicides in many countries and therefore of environmental concern [6].

### Scientific and technological background to Molecularly Imprinted Polymers (MIP's).

MIP's are made by synthesising cross-linked polymers in the presence of a template molecule (analyte). After removal of the template molecule from a resulting polymer network, specific recognition sites, that are complementary to the template in terms of their size, shape and functionality, are left. These materials are being extensively investigated for use as highly selective sorbents for clean-up and preconcentration of samples prior to analysis [7-10].

Another advantage of MIP's is that they are highly robust and can tolerate harsh conditions such as extreme pH, high temperature and pressure. However, for special environmental and biomedical applications, the technology still faces some challenges. For example, the binding site population may show heterogeneity, the mass transfer can in some instances be low, the template leakage may be of concern at limiting concentrations, and the performance is best in organic solvents that are often used in the preparation. Many of these challenges have nevertheless been successfully met by, for example, the use of semicovalent methods to increase binding site homogeneity, and the use of structural template analogues to avoid leakage [11].

MIP's have also been used for selective elution instead of selective extraction so that aqueous samples can be percolated [12]. Investigations on using aqueous buffer sample solutions instead of only water sample has also been reported in trying to extract samples directly onto MIP sorbents [13]. However, a remaining major challenge is to design and prepare MIP's to perform well in aqueous media. Several approaches have been used to address this problem, including the direct use of metal coordination-based recognition, but it has proven difficult to present a general solution to the situation. This is limiting current MIP-applications of the extraction of complex aqueous sample solutions. In a previous study, C₁₈-silica-columns were coupled with MIP-columns connected online to liquid chromatography [14]. This has allowed the percolation of aqueous water samples first onto a C₁₈-silica-sorbent and eluting it with organic solvent onto a MIP-column. This approach proved successful but required a rather complicated set-up including a number of valves and pumps for controlling the solutions flow system.

Membrane technology is currently identified as a very powerful approach in analytical sciences in that it offers various versions of simple, miniaturised and novel extraction configurations/techniques [15-17]. The general principle of membrane extraction is that one has two compartments, a donor and an acceptor phases separated by nonporous membrane or porous membrane impregnated with an organic solvent [18]. Target compounds diffuse from the donor solution through the membrane into the acceptor phase. Various compositions of the donor and acceptor phases have been reported to enhance the selectivity, such as adjusting the pH of the donor and acceptor phases such that only uncharged organic compounds dissolve into the membrane and are ionized once in the acceptor phase [18]. However, despite these adjustments, selectivity obtained in membrane extraction techniques is not enough when extracting complex samples such as wastewater, plant and vegetable extracts etc.

In accordance with the present invention the approach was to combine Liquid Membrane (LM) extraction and Molecularly Imprinted Polymer (MIP) to get what is referred to as LM-MIP extraction technique. Such a technique addresses the short comings of both LM and MIP to give very selective extraction.

The developed extraction technique carries both academic and industrial significance as it addresses central challenges in present MIP- and LM-technologies. The combination of the two techniques into a working unit has the potential to create synergy effects that may meet these challenges both in terms of aqueous phase performance and analyte selectivity. The LM-MIP-technique is also highly adaptable to versatile and miniaturised production formats, and has the potential to be commercialised.

### Configuration of the LM-MIP extraction technique

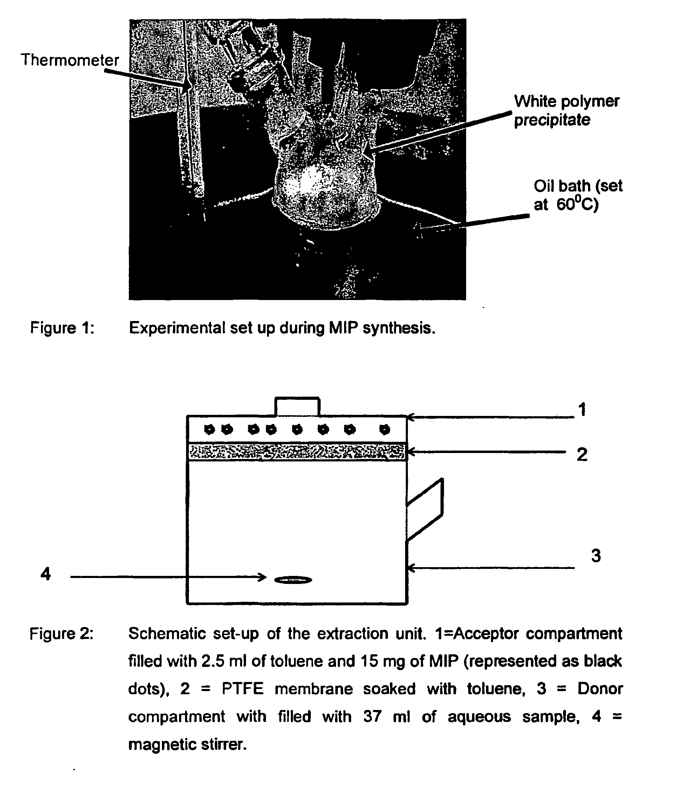

The configuration of the LM-MIP extraction technique is shown in Figure 1.

It consists of a container that could be made out of inert material such as glass or poly tetra flouro ethylene (PTFE). The container contains two compartments separated by a liquid membrane or nonporous hydrophobic membrane such as silicone rubber. One compartment is the donor containing the sample say in aqueous solution while the other is the acceptor phase filled with an organic liquid. In a case where a liquid membrane is used, organic liquid filling the acceptor phase is also the liquid membrane. The acceptor solution then contains MIP beads or MIP fibre. These are synthesized from the compound that is extracted from the water samples. Another configuration is where a hollow fibre is used. The hollow fibre separates two compartments, the donor containing the sample say in aqueous solution while the inside of the hollow fibre serves as the other compartment filled with an organic liquid. The organic liquid contains MIP beads or MIP fibre.

### Specific objectives and expected significance of the current embodiment

a. To combine the technologies of Molecularly Imprinted Polymers (MIP's) and Liquid Membranes (LM's), offering unsurpassed selectivity in environmental and biomedical applications;
b. to develop new extraction technique based on the combined MIP-LM-technology;
c. to further develop the extraction technique into a miniaturised format, still retaining its simplicity; and
d. to apply the developed extraction for extraction and preconcentration of various organic compounds in various complicated samples such as wastewater.

### EXPERIMENTAL

### Chemicals

S'imazine, atrazine, propazine, 2,2'-Azobis(2-isobutyronitrile) (AIBN), methacrylic acid (MAA), trimethylolpropane trimethacrylate (TRIM) and 1,1 Azobis(cyclohexane-carbonitrile) (ACCN) were purchased from Sigma Aldrich (Darmstadt, Germany). Organic solvents were from BDH, (London, England). All solvents used were of analytical grade. Silicone oil was bought from Kynethan Business Management (KBM) (Johannesburg, South Africa). The oil was added as a bath to heat the reaction mixture in the synthesis of molecular imprinting polymer for Triazine compounds.

### Apparatus

HPLC used in this project was from SRI (model 210D, LA, California, USA). It consisted of variable UV detector from which 220 nm was selected for detection of triazines. A C₁₈ column (5 µm x 4.6 mm x 25 cm) was from Supelco (Darmstadt, Germany). A computer equipped with peak simple chromatographic software (version 3.29) was used to process chromatograms.

An MSE, Mistral 1000 bench top centrifuge (Hettich, Germany) was used to sediment the MIPs during washing after synthesis and for shaking or dissolving sample solutions, a 460 Ultrasonic Elma (Braun, Germany) was used. The physical appearance of MIPs was viewed using scanning electron microscopes JSM-840 (JEOL, JMS-840, and Tokyo, Japan).

Porous PTFE membrane with polyethylene backing (pore size 0.2 µm, porosity 0.70 µm, total thickness 175 µm of which 115 µm is polyethylene backing, Type FG) was from Millipore (Bedford, MA, USA). The stainless steel extraction unit was constructed by CE engineering cc (Johannesburg, South Africa).

### Types of samples

To demonstrate the potential of the extraction technique to food samples, apple fruit and lettuce vegetable were investigated. Both food samples were bought from a local food shop and were picked randomly.

### Preparation of imprinted polymers

The MIP preparation method was done as follows;1 mmol of atrazine, 8 mmol of monomer (MAA), 25 mmol of cross-linking agent ethylene glycol dimethacrylate (EDMA) and 50 mg of initiator 2,2-azobis(2,4-dimethylvaleronitrile) (ABDV) were dissolved in 7.5 ml of acetonitrile in an air-tight glass vial. The mixture was then purged with nitrogen for 5 min. The polymerisation was done overnight at 60 °C in an oil-bath. The bulk polymers were successively ground in a mortar and crushed with ceramic beads in presence of methanol and washed with acetonitrile / acetic acid mixture (4:1v/v 5 x 10 ml) followed by acetonitrile (1 x 10 ml) and methanol (2 x 10 ml) at 60°C with shaking. The polymers were then dried overnight with a vacuum pump. Particle sizes in the range 25-90 µm were taken using two stainless steel sieves. The experimental apparatus in which the MIP was prepared is shown in Figure 1.

### Sample preparation

Both food samples were crushed and homogenised and 4 grams of vegetable and 40 grams of the apple were taken. To each of these, 150 ml of methanol was added. The samples were then sonicated for 30 minutes and left to stand for an hour. Then it was filtered through 0.45 µm filter paper. The filtrate was left to evaporate overnight. 150 ml of phosphate buffer at pH 7 was added to the thick liquid that remained. This was filtered once more and the filtrate was spiked with appropriate amount of Triazines and then extracted. Blanks samples were treated in the same way.

### Preparing 0.2M phosphate buffer

The phosphate buffer at pH 7 was prepared by dissolving 20.75g Na₂HPO₄ and 5.03g NaH₂PO₄ in 500 ml deionised water.

### Analysis

### Standard solutions

50 mg of each triazine was dissolved in 50 ml volumetric flask of methanol to make a stock solution of 1000 mg L⁻¹. All the standards with the concentration of 0.25, 0.5, 1, 1.5, 2, and 2.5 mg L⁻¹ were prepared from the stock solution. The prepared mobile phase was filtered twice and sonicated for 20 minutes in order to get rid of air bubbles.

### HPLC

HPLC used in this project was from SRI (model 210D, LA, California, USA). It consisted of variable UV detector from which 220 nm was selected for detection of triazines. A C₁₈ column (5 µm x 4.6 mm x 25 cm) was from Supelco (Darmstadt, Germany). A computer equipped with peak simple chromatographic software (version 3.29) was used to process chromatograms. HPLC mobile phase was composed of 60% acetonitrile and 40% deionised water.

### Preparing mobile phase

The prepared mobile phase was filtered twice and sonicated for 20 minutes. This was done to eliminate any particles and above all to remove dissolved air that would form bubbles when eluting.

### Reproducibility studies

The reproducibility study was done by injecting a standard solution 10 times. The results obtained gave standard deviation of 2.22 and % RSD of 13.2.

### Sample extraction

### Liquid-membrane -molecular imprinted polymer (LM-MIP) extraction

Preparation of the extraction unit involved first filling 37 ml of the sample in the lower compartment (Figure 2). The membrane previously soaked for 5 minutes in organic liquid usually, toluene was placed on top. The upper compartment was then screwed. 2.5 ml of the organic liquid followed by 10 mg of MIP beads were then added. The top hole was then closed and the unit was ready for extraction after shaking the unit to disperse the added MIP beads. Triazine compounds were extracted from aqueous phase into organic acceptor phase due to their solubility where they were bound onto MIP beads. After 90 minutes extraction, MIP beads were separated from the organic phase by passing the whole content through a 0.1 µm syringe filter. The MIP beads were retained. Non specific bound compounds were washed off the MIP by passing through 2 ml of dichloromethane. Using a small syringe, 3 ml of methanol in water (90:10%) was passed through to release the bound triazines which was then analysed on HPLC.

In some experiments, MMLLE was performed without the MIP in the acceptor phase so as to compare the selectivity to the combination. For this purpose, after MMLLE, the acceptor solution was taken out and left to evaporate at room temperature. Then 0.5 ml of hexane-ethyl acetate (3:2) was added and injected into the HPLC.

### RESULTS AND DISCUSSIONS

### Synthesis of MIPs

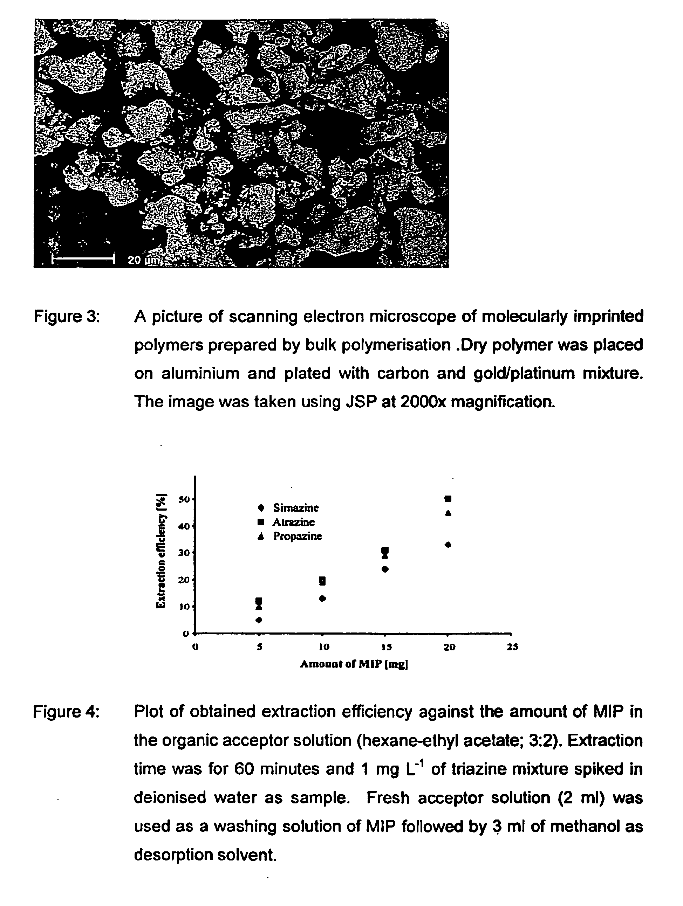

MIP preparation for triazine compounds is given in the experimental. The percentage yield was 100 %. Bulk polymers are much larger than those of precipitation polymerisation. The used bulk polymers were about 20-90 µm. These sizes were important because after extraction, the whole acceptor phase was passed through a 0.2 µm filter where the MIP beads were trapped allowing only the organic solvent to pass through. A picture of scanning electron microscope of molecularly imprinted polymers prepared by bulk polymerisation where dry polymer was placed on aluminium and plated with carbon and gold/platinum mixture is shown in Figure 3. The image was taken using JSP at 2000x magnification.

### Impurities in the prepared MIPs

Complete template extraction from the prepared MIP is a crucial step as this leaves selective cavities ready for analyte recognition and prevents breeding during application. In our study, Soxhlet extraction was used and the last washing solution was injected directly and also preconcentrated first before injection into the HPLC to test for impurities. No Triazine peak was detected. This suggests that most of the template was removed from the polymer.

### Variation of the amount of MIPs in the acceptor phase

Several factors govern the binding capacity of MIP beads. These factors include surface area, the pore size, pore size distribution and amount of MIP. Smaller particles are expected to have high surface area compared to bigger particles. Increase in amount of MIP beads lead to an increase in the triazine bound (Figure 4) as expected. The triazines re-binding were a little faster for propazine and atrazine compared to simazine (Figure 4). These differences are related to the structure of the compounds. The MIP was prepared with atrazine as template so it is expected to be bound more efficiently compared to others. However, the structure of propazine is much closer to atrazine so the two should have close rebinding kinetics.

A plot of obtained extraction efficiency against the amount of MIP in the organic acceptor solution (hexane-ethyl acetate; 3:2) is shown in Figure 4. Extraction time was for 60 minutes and 1 mg L⁻¹ of triazine mixture spiked in deionised water as sample. Fresh acceptor solution (2 ml) was used as a washing solution of MIP followed by 3 ml of methanol as desorption solvent.

### Influence of the organic acceptor solution on the re-binding of Triazine compounds onto MIP beads.

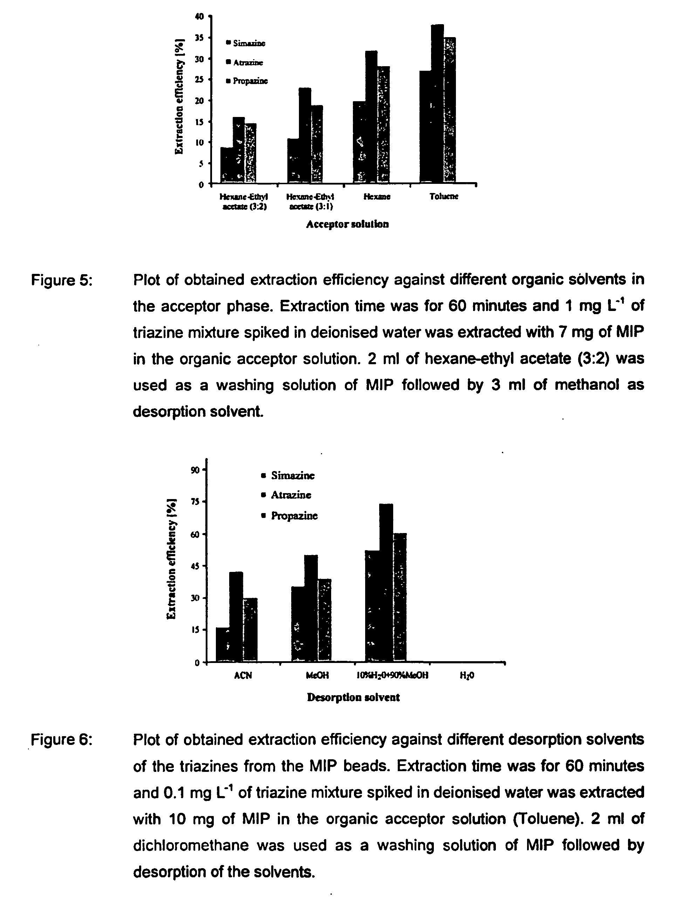

In this set-up, the best solvent is the one that gives high partitioning of the triazines from the aqueous phase and also allows the triazine re-binding onto MIP beads without any hindrance or competition. Several solvents were thus screened as possible acceptor solution. The results shown in Figure 5 indicate that more triazines were extracted with toluene as solvent which was used as porogen in MIP preparation. Factors that govern analyte-solvent interaction are van der Waals forces that include hydrogen bonding, dipole-dipole and london dispersion. Solvents with less of these forces would thus be preferred for triazine re-binding onto MIP beads. However, some of these forces are needed to have high partitioning of triazines from the aqueous phase into the organic solvent. Acetonitrile gave the least amount extracted. This could due to the fact that it could not make a stable liquid membrane. A plot of obtained extraction efficiency against different organic solvents in the acceptor phase is shown in Figure 5. Extraction time was for 60 minutes and 1 mg L⁻¹ of triazine mixture spiked in deionised water was extracted with 7 mg of MIP in the organic acceptor solution. 2 ml of hexane-ethyl acetate (3:2) was used as a washing solution of MIP followed by 3 ml of methanol as desorption solvent.

### Washing solvent

The best washing solvent should take the entire interfering matrix bound by nonspecific binding leaving target compounds still bound. Washing solvents such as toluene, hexane and dichloromethane were tested. Dichloromethane was chosen as the best solvent as it gave much cleaner chromatograms and high enrichments after analyte desorption from the MIP beads. Solvents such as ethyl acetate, acetonitrile, butyl methyl ketone, toluene and dichloromethane were screened but not detail. Since the polymer was prepared in toluene, it was supposed to give the best washing. However, dichloromethane which has the lowest hydrogen bond parameter among other solvents studied was chosen as the best choice.

### Influence of the amount of desorption solvent

The best solvent is one that elutes the trapped analytes preferably at one goal and with minimal volume to avoid dilution of the analytes. Figure 6 shows the results on the studying the type of desorption solvent from MIP binds. 90% methanol in water was found to be the best solvent compared to methanol, water and acetonitrile. A good solvent should be able to disrupt the interaction between the polymer and trapped analytes which is mainly hydrogen bonding. A plot of obtained extraction efficiency against different desorption solvents of the triazines from MIP beads is shown in Figure 6.

### Varying extraction time

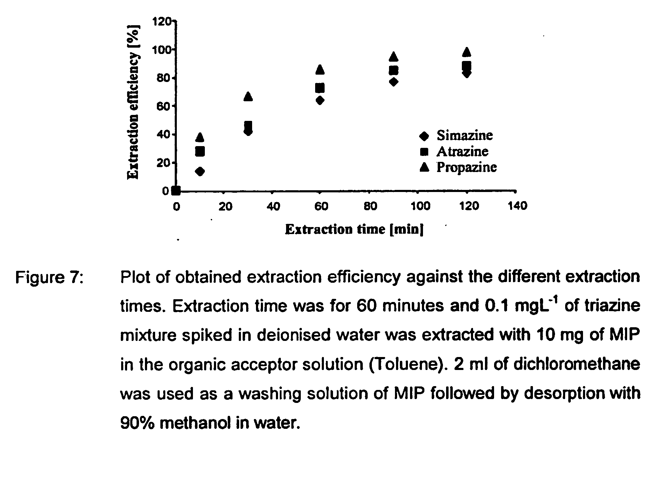

Figure 7 shows the results of varying the extraction time. The amount of triazines extracted increased with extraction time. This is expected since both diffusion of triazines from the donor side of the extraction unit through the membrane into the bulk acceptor phase and subsequent re-binding is time dependant. More time allows triazines to diffuse through the membrane leading to more re-binding onto MIP beads. However, at around 90 minutes, there are signs of reaching a plateau especially for atrazine and propazine. 90 minutes was thus taken as optimum extraction time since it was a compromise between high extraction and sample throughput.

### MMLLE-MIP technique extraction of food samples.

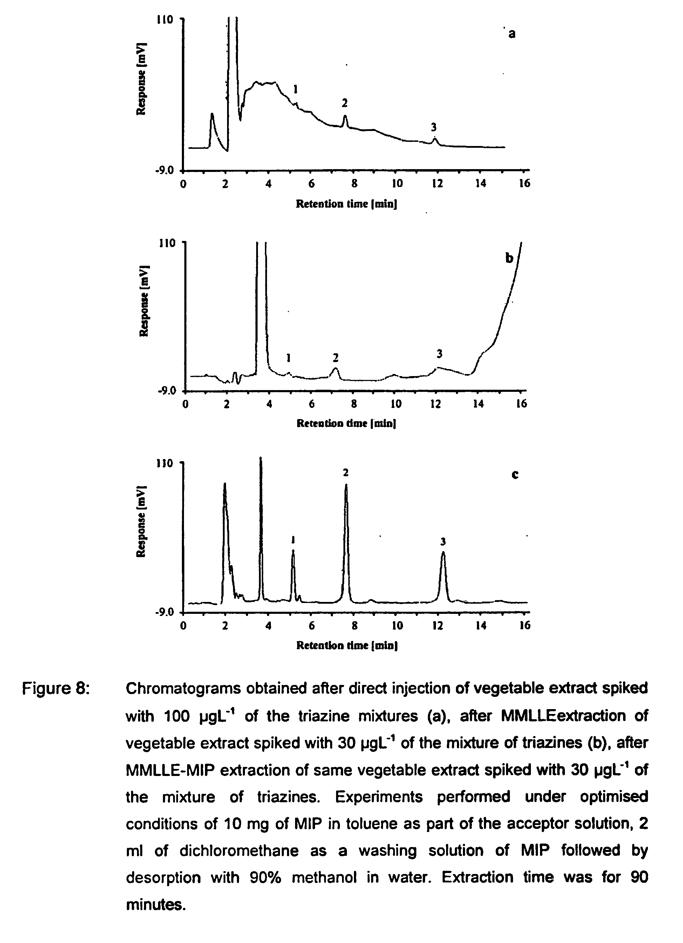

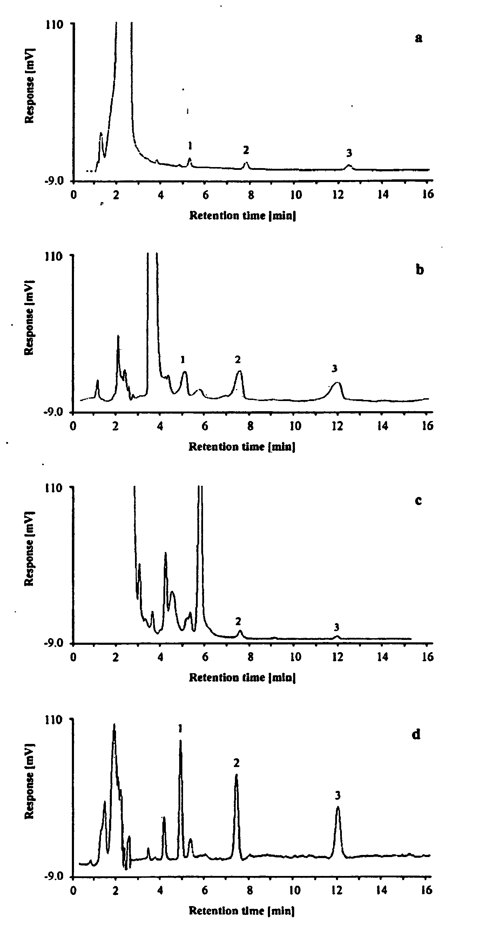

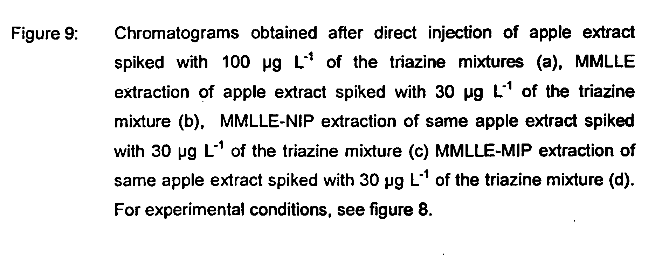

The selectivity of the MMLLE-MIP technique was demonstrated by extraction spiked vegetable and fruit extracts. The obtained chromatograms are given in Figures 8 and 9. In Figure 8a, a direct injection of the vegetable extract spiked with 100 µg L⁻¹ gave very small triazine peaks and huge peak due to matrix effects. Injection of the organic acceptor solution after MMLLE extraction of 30 µg L⁻¹ of the triazine mixture spiked in a vegetable extract only did not improve the chromatogram (Figure 8b). A combination of MMLLE-MIP (Figure 8c) gave clean and much bigger peaks. The same observations can be seen in an apple extract (Figure 9).

Table 1 shows a comparison of extraction efficiency and enrichment factors for the Triazine compounds obtained in vegetable and apple extracts. The results show that the extraction process is independent of sample matrix. This is expected since the MMLLE-MIP technique is very selective.

**Table 1: Comparison of extraction efficiency (E_{A}) and enrichment factor (Eₙ) after extraction of 0.03 mg L⁻¹ of triazine mixture spiked in lettuce and apple extracts. The experiments were performed at optimized conditions (see figure 8). Values in brackets are percentage relative standard deviations.**

| Compound | Lettuce vegetable extract | | Apple fruit extract | |
|---|---|---|---|---|
| | E_{A} | Eₙ | E_{A} | Eₙ |
| Simazine | 53 (7) | 40 | 55 (5) | 42 |
| Atrazine | 60 (10) | 43 | 63 (15) | 45 |
| Propazine | 55 (8) | 42 | 60 (4) | 43 |

### Bibliography

1. G. Font, J. Manes, J.C. Moito, Y. Pico, J. Chromatogr., 642 (1993), 135
2. B. Bjarnason, N. Bousios, S. Eremin, G. Johansson, Anal. Chimica Acta, 347 (1997), 111
3. C.L. Arthur, J. Pawliszyn, Anal. Chem., 62 (1990), 2145
4. E. Baltussen, H.G. Janssen, P. Sandra, C.A. Cramers, J. High Resolut. Chromatogr., 20 (1997), 385
5. J. Vercauteren, C. Peres, C. Devos, P. Sandra, F. Vanhaecke, L. Moens, Anal. Chem., 73 (2001), 1509
6. Avila, N.S.; Capote, F.P.; Luque de Castro, M.D.; J. Chromatogr. A 2007,1165,158
7. J. Olsen, P. Martin, I.D Wilson, Anal. Commun., 35 (1998), 13H
8. D. Stevenson, Trends Anal. Chem., 18 (1999), 154
9. B. Sellergren, Trends Anal. Chem., 18 (1999), 164
10. Ferrer, D. Barcelo, Trends Anal, Chem., 18 (1999), 180
11. J. Matsui, K. Fujiwara, T. Takeuchi, Anal. Chem., 72 (2000), 1810
12. Ferrer, F. Lanza, A. Tolokan, V. Horvath, B. Sellergren, G. Horvai, D. Barcelo, Anal. Chem., 72 (2000), 3934
13. C. Baggiani, F. Trotta, G. Girandi, C. Giovannoli, A. Vanni, Anal. Commun., 36 (1999), 263
14. B. Bjarnason, L. Chimuka, O. Ramstrom, Anal. Chem., 71 (1999),2152
15. G. Shen. H.K. Lee, Anal. Chem., 74 (2002), 648
16. F.G.P. Mullins, J. Sep. Sci., 24 (2001), 593
17. J. Norberg, E. Thordarson, Analyst, 125 (2000), 673
18. J.A. Jonsson, L. Mathiasson, J. Sep. Sci., 24 (2001). 495

## Claims

1. A method for extracting at least one desired chemical composition from a solution comprising placing a solution containing the desired chemical composition into a first chamber, placing an adsorbent material which, in use, selectively adsorbs and forms a complex with the desired chemical composition into a second chamber which is in fluid communication with the first chamber but separated therefrom by a liquid membrane which allows passage therethrough of the desired chemical composition to be extracted but impedes the passage of the desired chemical composition and adsorbent complex, allowing the desired chemical composition to diffuse across the membrane to be adsorbed by and form a complex with the adsorbent material, and removing the adsorbent material and desired chemical composition complex from the second chamber **characterised in that** the first and second chambers are contained within a single vessel.

2. A method for extracting at least one desired chemical composition from a solution as claimed in claim 1 **characterised in that** the second chamber is formed from a bag fashioned from the liquid membrane.

3. A method for extracting at least one desired chemical composition from a solution as claimed in claim 1 or in claim 2 **characterised in that** the membrane is fashioned into a number of hollow fibres, the inside or insides of which contain the adsorbent material and form the second chamber.

4. A method for extracting at least one desired chemical composition from a solution as claimed in claim 3 **characterised in that** the membrane is fashioned into a plurality of hollow fibres.

5. A method for extracting at least one desired chemical composition from a solution as claimed in claim 3 **characterised in that** the membrane is fashioned into a multiplicity of hollow fibres.

6. A method for extracting at least one desired chemical composition from a solution as claimed in any one of the preceding claims **characterised in that** the adsorbent material is in a solution.

7. A method for extracting at least one desired chemical composition from a solution as claimed in claim 6 **characterised in that** the solution includes an organic solvent.

8. A method for extracting at least one desired chemical composition from a solution as claimed in claim 7 **characterised in that** the organic solvent is toluene.

9. A method for extracting at least one desired chemical composition from a solution as claimed in any one of the claims 1 to 6 **characterised in that** the adsorbent material is an antibody.

10. A method for extracting at least one desired chemical composition from a solution as claimed in any one of the claims 1 to 6 **characterised in that** the adsorbent material is a polymer.

11. A method for extracting at least one desired chemical composition from a solution as claimed in claim 10 **characterised in that** the polymer is a molecularly imprinted polymer.

12. A method for extracting at least one desired chemical composition from a solution as claimed in claim 11 **characterised in that** the polymer is in the form of beads.

13. A method for extracting at least one desired chemical composition from a solution as claimed in claim 11 **characterised in that** the polymer is in the form of fibres.

14. A method for extracting at least one desired chemical composition from a solution as claimed in any one of the preceding claims **characterised in that** the solution containing the desired chemical composition is an aqueous solution.

15. A method for extracting at least one desired chemical composition from a solution as claimed in any one of the preceding claims **characterised in that** the second chamber contains a number of different adsorbent materials each of which, in use, selectively adsorbs and, consequently extracts, a different chemical composition from the solution in the first chamber.

## Patentansprüche

1. Ein Verfahren zum Extrahieren von wenigstens einer gewünschten chemischen Zusammensetzung aus einer Lösung umfassend
Einstellen einer Lösung, die die gewünschte chemische Zusammensetzung enthält, in eine erste Kammer,
Einstellen eines Adsorbermaterials, das bei Gebrauch selektiv adsorbiert und einen Komplex mit der gewünschten chemischen Zusammensetzung bildet in eine zweite Kammer, die im Flüssigkeitsaustausch mit der ersten Kammer steht, aber von dieser durch eine Flüssigkeitsmembran getrennt ist, die den Durchfluss der gewünschten chemischen Zusammensetzung, die extrahiert werden soll, durch diese erlaubt, aber den Durchfluss der gewünschten chemischen Zusammensetzung und des Adsorberkomplexes verhindert, sodass die gewünschte chemische Zusammensetzung durch die Membran diffundiert, und vom Adsorbermaterial adsorbiert wird und einen Komplex mit dem Adsorbermaterial bildet,
und Entfernen des Adsorbermaterials und des gewünschten chemischen Zusammensetzungskomplexes aus der zweiten Kammer, **dadurch gekennzeichnet, dass** die erste und die zweite Kammer sich in einem einzigen Behälter befinden.

2. Ein Verfahren zum Extrahieren von wenigstens einer gewünschten chemischen Zusammensetzung aus einer Lösung gemäß Anspruch 1, **dadurch gekennzeichnet, dass** die zweite Kammer aus einem Beutel gebildet wird, der aus einer Flüssigkeitsmembran hergestellt wird.

3. Ein Verfahren zum Extrahieren von wenigstens einer gewünschten chemischen Zusammensetzung aus einer Lösung gemäß Anspruch 1 oder Anspruch 2, **dadurch gekennzeichnet, dass** die Membran in einer Anzahl von Hohlfasern gestaltet wird, deren Innenseite oder deren Innenseiten das Adsorbermaterial enthalten und die zweite Kammer bilden.

4. Ein Verfahren zum Extrahieren von wenigstens einer gewünschten chemischen Zusammensetzung aus einer Lösung gemäß Anspruch 3, **dadurch gekennzeichnet, dass** die Membran in einer Mehrzahl von Hohlfasern gestaltet wird.

5. Ein Verfahren zum Extrahieren von wenigstens einer gewünschten chemischen Zusammensetzung aus einer Lösung gemäß Anspruch 3, **dadurch gekennzeichnet, dass** die Membran in einer Vielzahl von Hohlfasern gestaltet wird.

6. Ein Verfahren zum Extrahieren von wenigstens einer gewünschten chemischen Zusammensetzung aus einer Lösung gemäß einem der vorhergehenden Ansprüche, **dadurch gekennzeichnet, dass** das Adsorbermaterial in einer Lösung vorliegt.

7. Ein Verfahren zum Extrahieren von wenigstens einer chemischen Zusammensetzung aus einer Lösung gemäß Anspruch 6, **dadurch gekennzeichnet, dass** die Lösung ein organisches Lösungsmittel umfasst.

8. Ein Verfahren zum Extrahieren von wenigstens einer gewünschten chemischen Zusammensetzung aus einer Lösung gemäß Anspruch 7, **dadurch gekennzeichnet, dass** das organische Lösungsmittel Toluol ist.

9. Ein Verfahren zum Extrahieren von wenigstens einer gewünschten chemischen Zusammensetzung aus einer Lösung gemäß einem oder mehreren der Ansprüche 1 bis 6, **dadurch gekennzeichnet, dass** das Adsorbermaterial ein Antikörper ist.

10. Ein Verfahren zum Extrahieren von wenigstens einer gewünschten chemischen Zusammensetzung aus einer Lösung gemäß einem oder mehreren der Ansprüche 1 bis 6, **dadurch gekennzeichnet, dass** das Adsorbermaterial ein Polymer ist.

11. Ein Verfahren zum Extrahieren von wenigstens einer gewünschten chemischen Zusammensetzung aus einer Lösung gemäß Anspruch 10, **dadurch gekennzeichnet, dass** das Polymer ein molekular geprägtes Polymer ist.

12. Ein Verfahren zum Extrahieren von wenigstens einer gewünschten chemischen Zusammensetzung aus einer Lösung gemäß Anspruch 11, **dadurch gekennzeichnet, dass** das Polymer in der Form von Kügelchen vorliegt.

13. Ein Verfahren zum Extrahieren von wenigstens einer gewünschten chemischen Zusammensetzung aus einer Lösung gemäß Anspruch 11, **dadurch gekennzeichnet, dass** das Polymer in der Form von Fasern vorliegt.

14. Ein Verfahren zum Extrahieren von wenigstens einer gewünschten chemischen Zusammensetzung aus einer Lösung gemäß einem oder mehreren der vorhergehenden Ansprüche, **dadurch gekennzeichnet, dass** die Lösung, die die gewünschte chemische Zusammensetzung enthält, eine wässrige Lösung ist.

15. Ein Verfahren zum Extrahieren von wenigstens einer gewünschten chemischen Zusammensetzung aus einer Lösung gemäß einem oder mehreren der vorhergehenden Ansprüche, **dadurch gekennzeichnet, dass** die zweite Kammer eine Reihe von verschiedenen Adsorbermaterialien enthält, von denen jedes bei Gebrauch selektiv adsorbiert und folglich eine verschiedene chemische Zusammensetzung aus der Lösung in der ersten Kammer extrahiert.

## Revendications

1. Procédé destiné à extraire au moins une composition chimique souhaitée à partir d'une solution, qui comprend : le placement d'une solution contenant la composition chimique souhaitée dans une première chambre ; le placement d'un matériau adsorbant qui, en service, adsorbe de manière sélective et forme un complexe avec la composition chimique souhaitée, dans une seconde chambre qui est en communication de fluide avec la première chambre mais qui est séparée de celle-ci par une membrane liquide qui permet un passage à travers celle-ci de la composition chimique souhaitée à extraire mais empêche le passage du complexe de matériau adsorbant et de composition chimique souhaitée, en permettant à la composition chimique souhaitée de diffuser à travers la membrane pour être adsorbée par, et former un complexe avec, le matériau adsorbant ; et l'élimination du complexe de matériau adsorbant et de composition chimique souhaitée de la seconde chambre, **caractérisé en ce que** les première et seconde chambres sont contenues à l'intérieur d'un seul contenant.

2. Procédé destiné à extraire au moins une composition chimique souhaitée à partir d'une solution selon la revendication 1, **caractérisé en ce que** la seconde chambre est formée à partir d'un sac façonné à partir de la membrane liquide.

3. Procédé destiné à extraire au moins une composition chimique souhaitée à partir d'une solution selon la revendication 1 ou 2, **caractérisé en ce que** la membrane est façonnée dans un certain nombre de fibres creuses, dont le ou les intérieurs contiennent le matériau adsorbant et forment la seconde chambre.

4. Procédé destiné à extraire au moins une composition chimique souhaitée à partir d'une solution selon la revendication 3, **caractérisé en ce que** la membrane est façonnée dans une pluralité de fibres creuses.

5. Procédé destiné à extraire au moins une composition chimique souhaitée à partir d'une solution selon la revendication 3, **caractérisé en ce que** la membrane est façonnée dans une multiplicité de fibres creuses.

6. Procédé destiné à extraire au moins une composition chimique souhaitée à partir d'une solution selon l'une quelconque des revendications précédentes, **caractérisé en ce que** le matériau adsorbant se trouve dans une solution.

7. Procédé destiné à extraire au moins une composition chimique souhaitée à partir d'une solution selon la revendication 6, **caractérisé en ce que** la solution comprend un solvant organique.

8. Procédé destiné à extraire au moins une composition chimique souhaitée à partir d'une solution selon la revendication 7, **caractérisé en ce que** le solvant organique est du toluène.

9. Procédé destiné à extraire au moins une composition chimique souhaitée à partir d'une solution selon l'une quelconque des revendications 1 à 6, **caractérisé en ce que** le matériau adsorbant est un anticorps.

10. Procédé destiné à extraire au moins une composition chimique souhaitée à partir d'une solution selon l'une quelconque des revendications 1 à 6, **caractérisé en ce que** le matériau adsorbant est un polymère.

11. Procédé destiné à extraire au moins une composition chimique souhaitée à partir d'une solution selon la revendication 10, **caractérisé en ce que** le polymère est un polymère à empreinte moléculaire.

12. Procédé destiné à extraire au moins une composition chimique souhaitée à partir d'une solution selon la revendication 11, **caractérisé en ce que** le polymère se présente sous la forme de perles.

13. Procédé destiné à extraire au moins une composition chimique souhaitée à partir d'une solution selon la revendication 11, **caractérisé en ce que** le polymère se présente sous la forme de fibres.

14. Procédé destiné à extraire au moins une composition chimique souhaitée à partir d'une solution selon l'une quelconque des revendications précédentes, **caractérisé en ce que** la solution contenant la composition chimique souhaitée est une solution aqueuse.

15. Procédé destiné à extraire au moins une composition chimique souhaitée à partir d'une solution selon l'une quelconque des revendications précédentes, **caractérisé en ce que** la seconde chambre contient un certain nombre de différents matériaux adsorbants, chacun d'eux, en service, adsorbant de manière sélective et, par conséquent extrayant, une composition chimique différente à partir de la solution présente dans la première chambre.
